# EUROPÄISCHE PATENTSCHRIFT

(11) **EP 2 776 360 B1**
(45) Veröffentlichungstag und Bekanntmachung des Hinweises auf die Patenterteilung: **03.02.2016**
(21) Anmeldenummer: 12790413.4
(22) Anmeldetag: 07.11.2012
(51) Int. Cl.: B66C 23/68, F15B 15/06, E04G 21/04, F16H 27/02, B66C 23/00

(54) **MASTAUFBAU INSBESONDERE FÜR EINE AUTOBETONPUMPE SOWIE AUTOBETONPUMPE**
BOOM CONSTRUCTION, IN PARTICULAR FOR A TRUCK-MOUNTED CONCRETE PUMP, AND TRUCK-MOUNTED CONCRETE PUMP
STRUCTURE DE MÂT, DESTINÉ NOTAMMENT À UNE POMPE À BÉTON AUTOMOTRICE, AINSI QUE POMPE À BÉTON AUTOMOTRICE

(30) Priorität: 10.11.2011 AT 16612011
(43) Veröffentlichungstag der Anmeldung: 17.09.2014
(73) Patentinhaber: Schwing GmbH, 9431 St. Stefan (AT)
(72) Erfinder: SCHABELREITER, Johann, A-8132 Pernegg (AT); JÖBSTL, Horst, A-9400 Wolfsberg (AT); STEINBAUER, Roland, A-9431 St. Stefan (AT)
(74) Vertreter: Isfort, Olaf
(86) Internationale Anmeldenummer: PCT/EP2012/004639
(87) Internationale Veröffentlichungsnummer: WO 2013/068112

(56) Entgegenhaltungen:
- EP-A1- 0 894 915
- EP-A1- 1 486 680
- WO-A1-2011/094981
- CN-U- 201 730 339
- DE-A1- 3 339 495
- FR-A1- 2 907 869

## Beschreibung

Die Erfindung betrifft einen Mastaufbau insbesondere für eine Autobetonpumpe sowie eine Autobetonpumpe gemäß Oberbegriff des Anspruches 1 bzw. Anspruches 15.

Mastaufbauten bestehend aus mindestens zwei gelenkig über eine Schwenkachse miteinander verbundenen Mastarmen werden für verschiedene Arbeitsvorrichtungen, insbesondere Baumaschinen verwendet, etwa Bagger. Ein Hauptanwendungsfall sind aber Betonpumpen, sei es stationärer oder verfahrbarer Art, wie etwa Autobetonpumpen. Derartige Mastaufbauten sind jeweils aus mindestens zwei, zumeist auch mehr als zwei Mastarmen aufgebaut, die an den Enden gelenkig miteinander verbunden sind. Die Mastarme tragen Betonförderleitungen. Zum Austrag des Betons an gewünschte Positionen. Bei der Bauwerksherstellung werden die einzelnen Mastarme durch Verschwenken ausgefahren, wodurch eine Veränderung der gesamten Mastgeometrie resultiert und damit unterschiedliche Orte auf der Baustelle durch den Mast erreichbar sind. Mit dem Mast gilt es dabei möglichst große Entfernungen von der Betonpumpe zum Einbringort des Betons an der Baustelle zu realisieren. Aufgrund der großen Reichweite des Mastes unterliegt dieser starken Belastungen, die wesentlich aus der über die Länge des Mastes verlaufenden betonführenden Förderleitung und des darin befindlichen Betons herrühren. Allerdings dürfen bei dem Einsatz der Autobetonpumpen jedoch nicht die Lastgrenzen der jeweiligen Fahrzeugtypen überschritten werden, bei denen es sich zumeist um für den öffentlichen Straßenverkehr zugelassene Fahrzeuge, insbesondere Lastkraftfahrzeuge, handelt. Während die Massen der Förderleitungen des Beton so gut wie gar nicht beeinflusst werden können, ist hinsichtlich der Erlangung einer größeren Reichweite des Mastes eine Optimierung von dessen Massen erforderlich.

Dabei sind die Gelenkverbindungen zwischen den Mastarmen hohen Anforderungen ausgesetzt. Um einen ausreichend starken Antrieb zu erlangen, werden zumeist Koppelgetriebe in Art von doppelt wirkenden Hydraulikzylindern, sogenannte Schubkolbengetriebe, für die Verschwenkbewegung eingesetzt. Diese haben aber aufgrund der Komponenten der Koppelgetriebe und der zugehörigen linearen Antriebseinheiten ein relativ hohes Gewicht und erfordern bauweisebedingt zudem einen hohen Platzbedarf. Dies ist aber problematisch, weil derartige Autobetonpumpen auf Fahrzeugen montiert sind, die für den Fahrbetrieb im Straßenverkehr zugelassen werden müssen und deswegen auch hinsichtlich Breite und Länge bestimmten Vorschriften unterliegen. Ferner besteht ein Nachteil der verwendeten Schubkolbengetriebe auch darin, dass die Winkelgeschwindigkeit während der Verschwenkbewegung relativ ungleichmäßig ist. Deswegen ist für den sicheren Betrieb dieser Mastkonstruktion die Verwendung von hydraulischen Lasthalteventilen an den Hydraulikzylindern zwingend erforderlich, da deren Nachgeben eine unzulässige Veränderung des Drehwinkels zwischen den Mastarmen bewirken würde. Hinzu kommt, dass bei derartigen Koppelgetrieben in Art von Schubkolbengetrieben auch die Verschwenkung der beiden Mastarme zueinander nur in beschränktem Maße möglich ist, so dass auch darüber eine Beschränkung der Wirk- und Arbeitsweise bewerkstelligt wird.

Da bei mehrarmigen Mastaufbauten in der Regel die vorherrschende Belastung in den letzten Mastarmen geringer ist als in den ersten Mastarmen, werden im Stand der Technik alternativ zu den oben beschriebenen kinematischen System vereinzelt an den Gelenken zum Mastende hin auch hydraulische Drehantriebe verwendet (DE 698 01 997 T1) womit gleichmäßige Winkelgeschwindigkeiten erreicht werden können. Zwar bauen diese Mittel im Vergleich zu Koppel- bzw. Schubkolbengetrieben relativ klein und sind daher auch leichter im Gewicht, jedoch stehen nicht die erforderlichen Antriebsmomente bereit, die für ein Schwenken der Gelenke von Mastarmen auch im unteren Mastbereich notwendig sind. Daneben tritt bei Verwendung derartiger hydraulischer Drehantriebe für Lastaufnahmemittel, wie Gelenkarme von Manipulatoren, Mastarmen und dergleichen, das Problem auf, dass das Lastaufnahmemittel bzw. der Mastarm bei Deaktivierung des Drehantriebs infolge beispielsweise von Leckage noch verdrehbar bleibt und verschwenken kann. Ein solches Verdrehen bei deaktiviertem Antrieb ist aber, wie oben bereits ausgeführt wurde, bei diesen Anwendungen, insbesondere bei Autobetonpumpen, unzulässig, weswegen im Stand der Technik entsprechende Bremsvorrichtungen an den Drehantrieben eingesetzt werden, wie beispielsweise Lamellenbremsen, um ein Verdrehen der Mastarme bei deaktiviertem Drehantrieb zu verhindern. Bei derartigen Lamellenbremsen werden lamellenartig ausgebildete Bremsscheibenpaare gegeneinander verpresst um ein Verdrehen der Mastarme relativ zueinander zu verhindern, wobei es sich hier um ausgesprochene Verschleißteile handelt. Auch ist es bekannt, eine Bremse dadurch zu realisieren, dass ein Abfließen der Hydraulikflüssigkeit aus mindestens einer Druckkammer durch gesonderte Absperreinrichtungen verhindert wird. Diese Maßnahmen sind jedoch vergleichsweise aufwändig und auch störanfällig.

Schließlich ist aus der US 4771646 A eine Vorrichtung entnehmbar, mit Hilfe derer eine Drehbewegung erzeugt werden kann. Hierbei wird ein hydraulisch hin- und her bewegter Bauteil derartig von einer Zapfen- und Zahnkranzanordnung geführt, so dass eine Rotationsbewegung entsteht.

Eine Vorrichtung gemäß dem Oberbegriff des Anspruchs 1 ist aus WO 2011/094981 A1 bekannt.

Aufgabe der Erfindung ist es, einen Mastaufbau insbesondere für Autobetonpumpen bzw. eine Autobetonpumpe mit solchen Mastaufbauten zu schaffen, wobei sich die Mastarme auch unter Last mit konstruktiv einfachen, robusten und platzsparenden Mitteln über einen großen Schwenkwinkel gleichmäßig verschwenken lassen und in jeder Schwenkstellung die Mastarme sich sicher ohne großen Aufwand arretieren lassen. Dabei soll eine kompakte und gleichgewichtige Bauweise ermöglicht sein.

Diese Aufgabe wird erfindungsgemäß für einen Mastaufbau durch die Maßnahmen des kennzeichnenden Teils des Merkmales 1 gelöst, wobei zweckmäßige Weiterbildungen sich aus den Unteransprüchen ergeben.

Nach Maßgabe der Erfindung zeichnet sich ein Mastaufbau für insbesondere Autobetonpumpen durch eine hydraulischen Antrieb aus, bei dem mindestens eine Kolben-Zylinderanordnung mit Getriebe zur Umwandlung einer translatorischen Kolbenhin- und -herbewegung in eine Drehbewegung für die Mastarmverschwenkung vorgesehen ist, die mindestens zwei hydraulisch angetriebene, hin- und herbewegbare Ringkolben umfasst, die aber zudem einen Teil des Drehgetriebes bilden. Ferner wirken diese Ringkolben mit Außenringen des Drehgetriebes zusammen, welche aber wiederum Teil der Kolben-Zylinderanordnung sind, insbesondere Teil des Zylinders, und die Ringkolben hierbei übergreifen und in einem Gehäuse zur Bildung einer Zylinderkammer aufnehmen. Dadurch ergibt sich sozusagen ein innerhalb des Motors integrierter Kolben/Zylinderaufbau und damit eine platzsparende Anordnung, die zugleich gegenüber herkömmlichen Schubkolbengetrieben eine sehr große Verschwenkung der Mastarme zueinander ermöglicht, insbesondere eine Drehung um 360° ermöglicht. Zudem gewährleistet ein solcher hydraulischer Antrieb einen konstanten Drehantrieb. Dadurch, dass die Ringkolben sozusagen Teil des Getriebes sind, ergibt sich auch bei Ausfall des Drehantriebs eine automatische Sperrung infolge des Eingriffs der Verzahnungen zwischen Ringkolben und Außenringen.

Nach Maßgabe des Anspruchs 2 sitzen die Ringkolben axial verschieblich auf einem Innenring und sind mit diesem drehfest verbunden, was zweckmäßigerweise durch Formschluss, insbesondere durch eine Keilverzahnung zwischen Ringkolben und Innenring bewerkstelligt werden kann. Auf diesen Innenring, welcher vorzugsweise schaftartig, achsartig, wellenartig oder in Art eines Hohlzylinders ausgebildet und mit einem Ringflansch an einem Ende versehen ist, sitzen die Außenringe, die mit den Ringkolben zusammenwirken, wobei die Außenringe relativ zum Innenring drehbar gelagert, aber axial gegenüber dem Innenring bzw. am Innenring festgelegt sind. Die Außenringe bilden hierbei insbesondere Bestandteile des Gehäuses des Drehantriebs. Der hydraulische Drehantrieb kommt damit mit wenigen Bauelementen aus und ist damit weitgehend verschleißunanfällig und wartungsarm.

Jeder Ringkolben ist mit jeweils zwei gegengerichteten Stirnverzahnungen ausgerüstet, die mit komplementären ringförmigen Stirnverzahnungen an den Außenringen zusammenwirken. Dadurch, dass die Ringkolben wechselweise hin- und herbewegt werden, greifen die Stirnverzahnungen der Ringkolben jeweils in die entsprechenden Stirnverzahnungen der Außenringe ein, wobei die treibenden Flanken jeweils eine Verdrehung der Außenringe über die Stirnverzahnungen bewerkstelligen. Fällt der Drehantrieb aus oder wird der Drehantrieb in sonst einer Weise deaktiviert, wird infolge der Eingriffsstellung der diversen Stirnverzahnungen ein Selbstsperreffekt bewerkstelligt, so dass die einmal eingenommene Winkelstellung im Prinzip nicht mehr verändert wird. Gesonderte Bremsvorrichtungen sind damit nicht länger erforderlich.

Nach Maßgabe des Anspruchs 4 weist der Innenring einen Ringflansch auf und ist auf seiner anderen Seite mit einem Deckel versehen. Deckel und Ringflansch können hierbei über Schraubverbindungen mit dem Innenring verbindbar sein. Zwischen Deckel und Ringflansch sind die Ringkolben und die Außenringe angeordnet und damit platzsparend auf geringstem Raume. Das Gebilde aus Deckel, Ringflansch, Innenring und Außenringe bildet dabei dann den Zylinder für die darin aufgenommenen und infolge Hydraulikmittelzufuhr hin- und herbewegbaren Ringkolben, die mit Hin- und Herbewegung wechselweise mit den entsprechenden komplementären Stirnverzahnungen der Außenringe in Eingriff gelangen und für den Antrieb sorgen.

Hierbei liegt es auf der Hand, dass die zusammenwirkenden Stirnverzahnungen von Ringkolben und Außenringe jeweils aufeinander zu gerichtet, das heißt vom Ringflansch des Innenrings entweder weg oder in Richtung des Ringflansches gerichtet sind. Stirnverzahnung hierbei meint, wie zeichnerisch dargestellt ist, dass die Zähne nicht radial sondern axial ausgerichtet sind. Hierbei sind die Zahnflanken der Stirnverzahnung so ausgebildet, dass durch die Eingriffstellung zwischen den zusammenwirkenden Stirnverzahnungen der Hubantrieb der Kolben in eine Drehbewegung der Außenringe umgewandelt wird.

Zweckmäßigerweise werden nach Maßgabe der Erfindung für einen hydraulischen Drehantrieb zwei Ringkolben verwendet, die von drei Außenringen umgeben sind. Selbstverständlich lassen sich auch mehr Ringkolben an einem Drehantrieb verwirklichen, wobei dann entsprechend mehrere Außenringe vorgesehen sind. Allerdings ist es auch möglich, anstelle eines Drehantriebs mehrere hintereinander geschaltete Drehantriebe zu verwenden.

Der Zusammenhalt der einzelnen Bauelemente des Drehantriebs erfolgt hierbei in einfacher Weise durch Schraubverbindungen, wobei Deckel und Ringflansch mit dem Innenring verschraubt und die Außenringe miteinander über radial hervorstehende Ringschultern verschraubt sein können. Hierzu sind über den Umfang jeweils mehrere Schrauböffnungen für den Eingriff der Schraubverbindungen vorgesehen. Selbstverständlich sind die Kolbenräume bzw. die Kolben in geeigneter Weise abgedichtet, ebenso wie die einzelnen Bauelemente der Zylinderanordnung, was jedoch im Belieben des fachmännischen Handelns liegt und deswegen nicht eigens beschrieben und dargestellt werden muss.

Zweckmäßigerweise werden die Ringkolben mit einer Hubversetzung zueinander angetrieben, vorzugsweise im Falle von zwei Ringkolben um einen halben Hub versetzt zueinander. Hierbei befindet sich vorzugsweise der eine Kolben in seiner Endlage, während der andere Kolben sich in einer mittleren Position befindet. Zweckmäßigerweise sind die Ringkolben beidseitig beaufschlagbar, so dass je Kolben zwei Hydraulikanschlüsse vorgesehen sind. Die Steuerung des Hubs der Ringkolben erfolgt zweckmäßigerweise, jedoch nicht zwingend, mechanisch und zwar insbesondere mit Hilfe einer geeigneten Steuerscheibe, welche die Schaltimpusle für die entsprechenden Hydraulikventile für die Hydraulikmittelzufuhr bestimmt. Die Richtungsänderung des Drehantriebs, also die Drehumkehr, erfolgt hierbei in einfacher Weise durch Umkehrung der Hubfolge der Ringkolben, bedingt durch die geeignete Hubversetzung des Antriebs der beiden Kolben.

Im Rahmen der Erfindung wird auch selbständiger Schutz für die beschriebene Autobetonpumpe begehrt, der auch für andere Anwendungsfälle einsetzbar ist, wie etwa Bagger, Kräne, Antrieb eines Drehkranzes für Schwenkaufbauten und dergleichen.

Nachfolgend wir ein bevorzugtes Ausführungsbeispiel anhand der Zeichnungen beschrieben. Darin zeigen in rein schematischer und nicht einschränkender Weise
- Figur 1: eine aufgelöste Darstellung einer bevorzugten Ausführungsform des hydraulischen Antriebs;
- Figur 2: eine gleichfalls aufgelöste Darstellung des Antriebs gemäß Anspruch 1 zur Erläuterung der Reihenfolge der Montage;
- Figur 3: eine Seitenansicht der bevorzugten Ausführungsform, gleichfalls in aufgelöster Darstellung;
- Figur 4: eine Darstellung des hydraulischen Drehantriebs in zusammengebautem Zustand;
- Figur 5: eine Abfolge der Bauelemente des Drehantriebs während eines Teils des Zyklusverlaufes während der Kolbenbewegung;
- Figur 6: eine schematische Darstellung der Wirkung der Keilverzahnung zwischen Ringkolben und Außenring sowie
- Figur 7: eine Darstellung des Anwendungsfalls einer Autobetonpumpe.

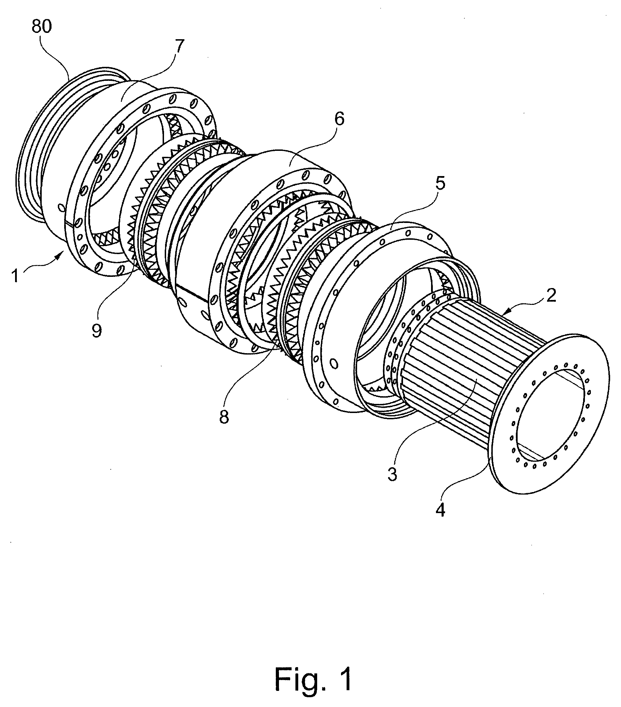

Figur 1 zeigt in aufgelöster Darstellung einen allgemein mit 1 bezeichneten hydraulischen Drehantrieb, der insbesondere als Schwenkantrieb für die Verschwenkung des Gelenkwinkels zwischen zwei Gelenkarmen von Manipulatoren, insbesondere zwei Mastarmen eines Mastaufbaus verwendet wird. Derartige Mastaufbauten werden unter anderem bei Autobetonpumpen verwendet. Diese Mastaufbauten setzen sich aus mehreren hintereinander angeordneten und gelenkig miteinander verbundenen Mastarmen zusammen, die durch Verschwenkbewegung der einzelnen Mastarme relativ zueinander in verschiedene Betriebsstellungen und in eine eingeschwenkte Ruhestellung verschwenkbar sind. Bei Autobetonpumpen ist der Mastaufbau üblicherweise auf einem Drehkranz angeordnet, der auf dem Fahrzeugrahmen montiert ist. Der Mastaufbau trägt ferner Rohrförderleitungen für die Förderung von Beton. Derartige Mastaufbauten, insbesondere für Autobetonpumpen, sind dem Fachmann allgemein bekannt, so dass diesbezüglich keine näheren Ausführungen erforderlich sind. Hierzu kann auf den allgemein bekannten Stand der Technik verwiesen werden.

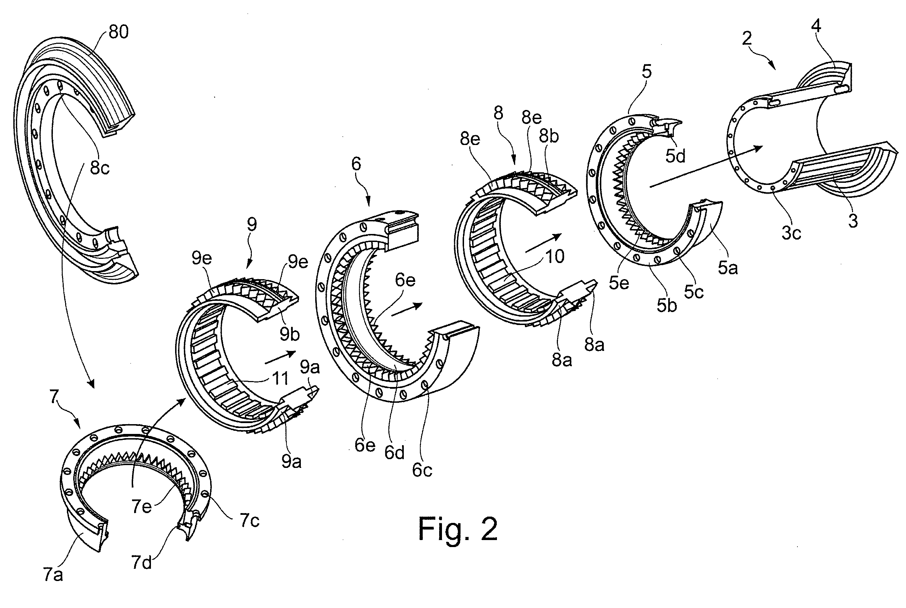

Der hydraulische Schwenkantrieb 1 nach Figur 1 umfasst einen Innenring 2, der als Keilwelle ausgelegt ist und insofern einen mit einer Keilverzahnung versehenen, hier schaftartigen Keilabschnitt 3 aufweist. Ferner ist der Innenring an einem stirnseitigen Ende mit einem radial nach Außen vorstehenden Ringflansch 4 versehen. Der Antrieb nach Figur 1 umfasst ferner drei Außenringe 5, 6 und 7, von denen der in Figur 1 rechts dargestellte Außenring 5 benachbart des Ringflansches 4 angeordnet ist. An diesem schließt sich dann der mittlere Außenring 6 und schließlich der links angeordnete Außenring 7 an, der auf der Keilwelle durch einen mit 80 bezeichneten Deckel gehalten ist, der wiederum mit der Stirnseite des Innenrings 2 fest verbunden ist, insbesondere verschraubt ist. Der Aufbau nach Figur 1 umfasst ferner zwei Ringkolben 8 und 9, die innerhalb des Aufbaus hydraulisch translatorisch gesteuert hin- und her bewegbar sind. Die Ringkolben 8, 9 sind hierbei axial verschieblich auf dem Innenring 2 gehalten, weisen jedoch am Innenumfang aus der Figur 2 näher ersichtliche Keilverzahnungen 10 und 11 auf, die mit der Keilverzahnung 3 des Innenrings 2 zusammenwirken, so dass nach dem Aufsetzen der Ringkolben 8 und 9 diese zwar axial verschiebbar längs des Innenrings 2, jedoch drehfest mit diesem Innenring verbunden sind, also relativ zum Innenring nicht verdrehbar sind.

Anzumerken ist hierbei, dass zur Vereinfachung der Darstellung bei derartigen hydraulischen Drehantrieben übliche Dichtungsmittel wie auch Hydraulikanschlüsse im Detail nicht dargestellt sind. Diese können nach Belieben und geeignet gewählt werden, was allerdings dem Fachmann selbstverständlich ist, so dass ein Eingehen hierauf entbehrlich ist.

Figur 2 zeigt eine Montageweise zur Bildung des Schwenkantriebs mit den in Figur 1 dargestellten Bauelementen. Ersichtlich ist die den Innenring 2 darstellende Keilwelle mit Keilverzahnung 3, wobei dieser als Welle oder Schaft ausgelegte Innenring an seinem hier rechts dargestellten Ende mit einem radial nach außen abstehenden und umlaufend ausgebildeten ringförmigen Flansch 4 versehen ist. Dem Halteflansch 4 kommt hierbei, wie weiter unten noch beschrieben wird, im Wesentlichen eine Haltefunktion für die darauf angeordneten Bauelemente zu. Auf den Schaftabschnitt dieses Innenrings 2 wird zunächst der in Figur 2 rechts dargestellte Außenring 5 aufgesetzt und mit seinem rechtsseitigen stirnseitigen Ende bis zum Ringflansch 4 und zwar auf Anschlag hin geschoben, wobei der Außenring 5 mit dem Ringflansch 4 ein Drehlager bildet, da der Außenring relativ zum Innenring 2 drehbar ist.

Der Außenring 5 weist einen Schaftabschnitt 5a und einen stirnseitig ausgebildeten nach außen vorstehenden umlaufenden ringförmigen Radialflansch 5b auf, der mit Schrauböffnungen 5c über den Umfang versehen ist. Ferner ist am Außenring 5 an der dem Ringflansch 4 benachbarten Ende eine radial nach innen vorstehende Ringschulter 5d vorgesehen, an deren Radialfläche eine umlaufende ringförmige Stirnverzahnung 5e vorgesehen ist.

In diesen Außenring 5 wird ein Ringkolben 8 eingesteckt. Dieser Ringkolben 8 weist beidseitig einen Schaftabschnitt 8a und in mittiger Anordnung eine umlaufende ringförmige Außenschulter 8b auf, an deren beiden Stirnseiten jeweils Stirnverzahnungen 8e vorgesehen sind, die zueinander entgegengesetzt gerichtet sind, das heißt, die in der Figur 2 rechts dargestellte Stirnverzahnung 8e weist in Richtung des Ringflansches 4 bzw. des Außenringes 5, hingegen die links dargestellte Stirnverzahnung 8e in die andere Richtung, also in Richtung weg vom Ringflansch 4. Deutlich ist aus Figur 2 auch die Keilverzahnung 10 für die Drehfixierung des Kolbens in Bezug auf den Innenring ersichtlich. Der Ringkolben 8 wird hierbei so weit in den Außenring 5 eingesetzt, dass dieser mit seiner Stirnverzahnung an die Verzahnung des Außenrings 5 anstößt.

Schließlich wird der mittlere Außenring 6 auf den Ringkolben 8 aufgesteckt und in Anschlag auf den rechten Außenring 5 geschoben. Auch dieser mittlere Außenring 6 weist über den Umfang verteilt angeordnete Schrauböffnungen 6c auf. Ferner ist mittig des Außenrings 6 eine nach innen vorstehende umlaufende und ringförmige Radialschulter 6d vorgesehen, an deren beide Stirnseiten Stirnverzahnungen 6e ausgebildet sind, die wiederum ringförmig verlaufen. Die Stirnverzahnungen 6e des mittleren Außenrings sind analog der Ringverzahnungen des Ringkolbens 8 entgegengesetzt zueinander gerichtet, das heißt die in Figur 2 rechts dargestellte Stirnverzahnung 6e weist in Richtung des Ringflansches 4 desselben Ringes 2, wohingegen die links dargestellte Stirnverzahnung 6e gerade in die entgegengesetzte Richtung weist.

In diesem mittleren Außenring 6 ist schließlich ein analog zum Ringkolben 8 aufgebauter und damit baugleicher Ringkolben 9 eingesetzt, wobei für dieselben Bauteile dieselben Buchstabenverweise verwendet sind wie für den Ringkolben 8.

Schließlich wird auf diesen wiederum im Anschlag zur Gegenverzahnung aufgesetzten Ringkolben 9 der dritte und hier links dargestellte Außenring 7 aufgesetzt und zwar auf den Ringkolben 9, wobei der Außenring 7 im Prinzip baugleich zum Außenring 5 aufgebaut ist, so dass auch die vergleichbaren Bezugszeichen verwendet worden sind.

Den seitlichen (linken) Abschluss bildet schließlich der Deckel 80, der ebenfalls mit über den Umfang verteilten Schrauböffnungen 8c versehen ist, über den der Deckel 80 mit dem Innenring 2 durch Schraubverbindungen fest verbindbar ist, wobei die Schrauböffnungen für diese Schraubverbindungen auf Seiten des Innenrings 2 in Figur 2 mit 3c bezeichnet worden sind.

Insoweit wird der Deckel 80 am Innenring 4 befestigt und nimmt die drei Außenringe 5, 6 und 7 zwischen Ringflansch 4 und Deckel 80 auf, wobei diese drei Außenringe 5 bis 7, die auf den Schaft des Innenrings 2 aufgesetzten beiden Ringkolben 8 und 9 übergreifen und damit einkammern. Die Außenringe 5 bis 7 bilden dabei das Gehäuse des Drehantriebs und die zu einer Einheit miteinander verbundenen Außenringe 5 bis 7 sind hierbei drehbar gelagert bzgl. des Innenrings 2 mit seinem Ringflansch 4 und bezüglich des mit dem Innenring 2 befestigten Deckels 80. Insoweit sind die Außenringe 5 bis 7 gegenüber dem Innenring 2 mit Deckel 80 drehbar, so dass zwischen dem wellenartigen Innenring 2, der als Hohlwelle zweckmäßigerweise ausgebildet ist, und den Außenringen 5 bis 7 ein Drehlager gebildet ist. Bedarfweise kann diese Drehlager als reines Gleitdrehlager oder auch als Wälzlager ausgebildet sein.

Innenring 2 mit Ringflansch 4, Deckel 8 sowie die drei Außenringe 5, 6 und 7 bilden hierbei einen Zylinder einer Zylinder-Kolben-Anordnung, innerhalb dem die beiden Ringkolben 8 und 9 axial hin- und her beweglich längs des Schafts des Innenrings 2 aufgenommen sind.

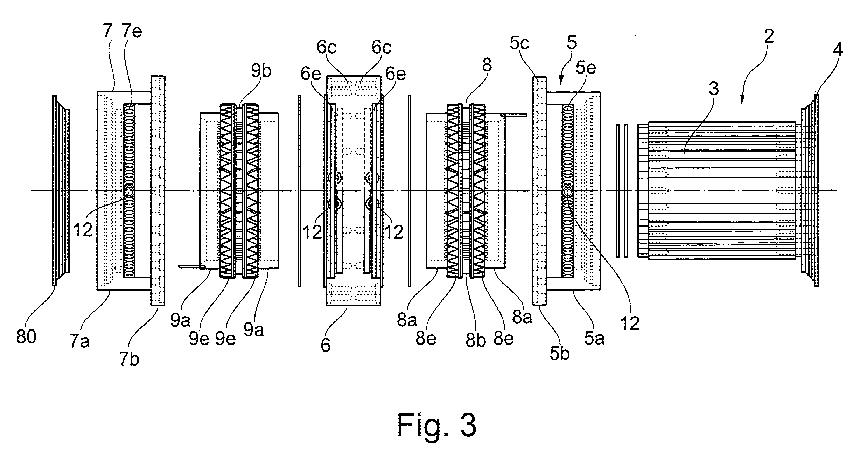

Der Aufbau ergibt sich im Übrigen auch aus Figur 3 in einer Seitenansicht, wobei in Figur 3 dieselben Bezugszeichen wie in Figur 2 verwendet worden sind.

Aus Figur 3 sind rein schematisch auch Hydraulikanschlüsse 12 entnehmbar und zwar bezüglich des linken Außenrings 7, des mittleren Außenrings 6, hier sind zwei Anschlüsse vorgesehen, und bezüglich des rechten Außenrings 5 mit einem Hydraulikanschluss 12. Ferner sind aus der Figur auch geeignet vorzusehende Distanzscheiben ersichtlich, auf die hier nicht näher eingegangen werden muss. Auch die Schrauböffnungen sind mit strichlierter Linie angedeutet. Die Ringkolben 8 und 9 werden hierbei hydraulisch angetrieben und zwar beidseitig, weshalb je Ringkolben 8 oder 9 jeweils zwei Hydraulikanschlüsse 12 vorgesehen sind.

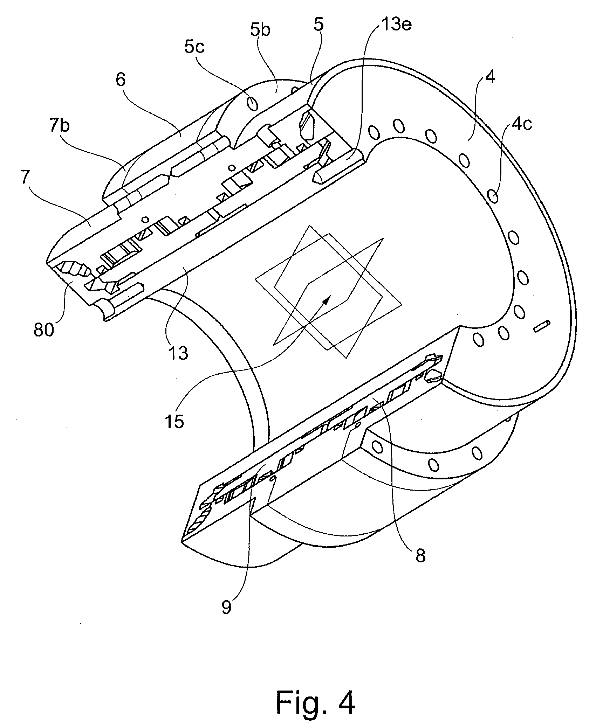

Der Zusammenbau der in den Figuren 1 bis 3 dargestellten Bauelemente ergibt sich schließlich aus Figur 4, die den Schwenkantrieb 1 in zusammengebauter und teilweise geschnittener Stellung zeigt. Auch hier werden dieselben Bezugszeichen wie in den Figuren 1 bis 3 verwendet. Aus Figur 4 geht recht deutlich hervor, dass die beiden Ringkolben 8 und 9 axial beweglich innerhalb des Aufbaus aus Ringflansch 4, Deckel 80 und den Außenringen sowie dem Schaftabschnitt des Innenringes 2 geführt sind und damit durch geeignete Hydraulikmittelzufuhr über die Hydraulikanschlüsse 12 translatorisch hin- und her bewegt werden können. Aus Figur 4 ergibt sich ferner, dass bedarfsweise der Ringflansch 4 über den Umfang verteilt mit Öffnungen 4c versehen sein kann, so dass dieser durch Schraubverbindungen und/oder Bolzen bzw. Stiftverbindungen mit dem Schaft 13 des Innenrings verbunden werden kann. Hierbei erfolgt zwecksmäßigerweise ein formschlüssiger Verbund. Hierzu ist der Schaft 13 stirnseitig mit entsprechenden Öffnungen 13e versehen. Innenring 2 und Ringflansch 4 bilden dabei eine Einheit. Wie Figur 4 recht deutlich zeigt, sitzt der Außenring 5 in Anschlag am Ringflansch 4 und auch die beiden weiteren Außenringe 6 und 7 sind auf Anschlag zueinander gesetzt und stirnseitig durch den Deckel 80 fixiert und damit fest innerhalb des Verbunds aufgenommen, allerdings drehbar gelagert, was wesentlich ist. Wie Figur 4 recht deutlich zeigt, sind die beiden sozusagen axial schwimmend gelagerten Ringkolben 8 und 9 axial in Richtung der Begrenzung der Verzahnung der Außenringe bewegbar. Selbstverständlich sind die Kolben, hierzu dient auch die axial nach außen vorstehende Schulter 8b entsprechend abgedichtet, so dass durch Beaufschlagung von Hydraulikflüssigkeit linksseitig bzw. rechtsseitig des jeweiligen Kolbens dieser entsprechend translatorisch auf der Keilwelle des Innenrings 2 zwischen den Eingriffstellungen mit den Verzahnungen bewegt wird.

Wesentlich ist, dass der hydraulische Antrieb der beiden Ringkolben versetzt zueinander ist, so dass diese sozusagen alternatierend zueinander bewegt werden. Damit lässt sich ein konstanter Drehantrieb ermöglichen. Insbesondere sind die beiden hydraulisch angetriebenen Ringkolben um einen halben Hub versetzt alternierend zueinander gesteuert. Die Steuerung erfolgt in geeigneter Weise und wird hierbei vorzugsweise mechanisch betrieben und zwar durch eine Steuerscheibe, die hier nicht dargestellt ist, welche die Schaltimpulse für die entsprechenden Hydraulikventile für die Zufuhr der Hydraulikflüssigkeit zu den beiden Ringkolben steuert. Eine solch mechanische Steuerung ist vorteilhaft, weil dadurch eine unverfälschte Steuerung in jedem Betriebszustand möglich ist. Dies ist wichtig für die Eingriffsstellung der miteinander zusammenwirkenden Stirnverzahnungen. Bei der versetzten Hubanordnung der Kolben um einen halben Hub befindet sich beispielsweise einer der Ringkolben in seiner Endlage, während der andere Kolben sich in einer mittleren Eingriffstellung befindet. Zudem ruht während der Umschaltphase der Fahrrichtung zweckmäßigerweise der Antrieb des entsprechenden Kolbens kurzzeitig.

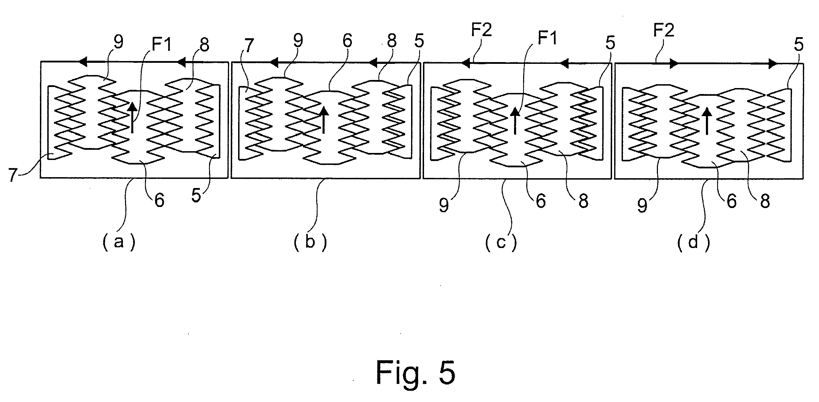

Figur 5 zeigt beispielshalber die Abfolge von Eingriffsstellungen der beiden Ringkolben in Bezug auf die Stirnverzahnungen der Außenringe. Die in Figur 5 dargestellte Abfolge zeigt hierbei einen Drehantrieb an, bei dem die drei Außenringe in Uhrzeigerrichtung bewegt werden, wie in den Figuren 5a bis 5d durch Pfeil F1 gekennzeichnet ist. Die Pfeile F2 zeigen die Hubrichtung, also die translatorische Bewegung der beiden Ringkolben an. Anzumerken ist hierbei, dass Figur 5 wiederum rein schematisch dargestellt ist. Deswegen sind Ringkolben und Außenringe jeweils nur mit den entsprechenden Bezugszeichen 5 bis 9 versehen, ohne die Stirnverzahnungen der einzelnen Bauelemente mit den entsprechenden Bezugszeichen zu versehen. Ersichtlich greifen die Verzahnungen der beiden Ringkolben 8, 9 wechselweise in die entsprechenden Verzahnungen der entsprechenden Außenringe, hier jeweils der Ringkolben 8 wechselweise in die Außenringe 5 und 6 sowie Ringkolben 9 wechselweise in die Außenringe 6 und 7. Wenn beispielsweise der Ringkolben 9 sich mit seiner in Figur 5 links dargestellten Verzahnung im Bild a nach links bewegt und in die entsprechende Stirnverzahnung des linken Außenrings 7 eingreift, wird dieser in Uhrzeigerrichtung gedreht, wobei die rechte Stirnverzahnung des Ringkolbens 9 aus dem Eingriff mit der entsprechenden Verzahnung des mittleren Außenrings gelangt. Gleiches gilt für die Verzahnung des Ringkolbens 8. Infolge der Hin- und Herbewegung ergibt sich ein wechselseitiger Eingriff, so dass der Schwenkantrieb um einen beliebigen Winkel gedreht werden kann und zwar in einer konstanten Drehbewegung, die fein gesteuert werden kann. Durch eine Anpassung der Geometrie der Verzahnung in deren Höhenrichtung kann überdies eine Flankenanpassung der Kontaktflächen der Verzahnungen erreicht werden, welche bewirkt, dass eine möglichst große Fläche der Zähne für den Kontakt in der Eingriffstellung genutzt werden kann. Ersichtlich wird über den Eingriff der Verzahnungen erreicht, dass die Außenringe aufgrund der durch die Keilkraft der an den Zahnflanken auftretenden Kräfte gedreht werden.

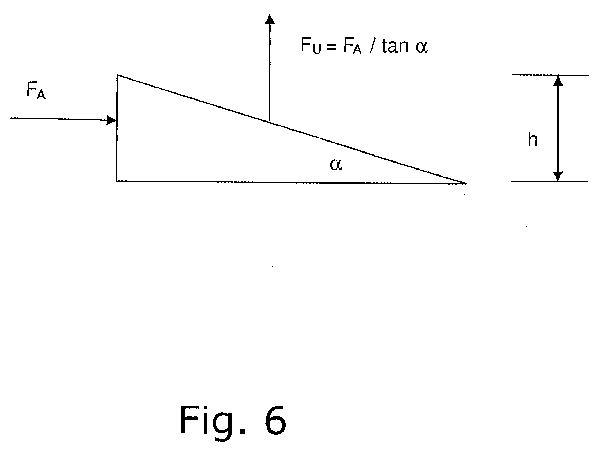

Figur 6 gibt hierbei das Grundprinzip der Keilverzahnung an. Die Verzahnungen an den Ringkolben greifen hierbei in die Verzahnung der Außenringe und wandeln derart die Axialkraft der Kolbenbewegung F_{A} in eine Drehkraft F_{U} um. Mit jedem Kolbenhub wird somit eine Drehbewegung um den Betrag h der Gegenkathete bewirkt.

Die Figuren 5a bis 5d zeigen hierbei die Drehung der Außenringe in Uhrzeigerrichtung. Durch eine Umkehrung der Hubfolge der über eine Steuerscheibe beispielsweise angetriebene Ringkolben ist eine gegenläufige Drehrichtung möglich, also der Drehantrieb der Außenringe entgegen Uhrzeigerrichtung, was aber in der Abfolge der Darstellungen in Figur 5 nicht wiedergegeben ist.

Ebenfalls nicht dargestellt in den Figuren ist die Zuordnung der Bauelemente des Drehantriebs zu den Mastarmen, was aber für den Fachmann selbstverständlich ist. Beispielsweise kann einer der beiden relativ zueinander verschwenkbaren Mastarme mit dem Ringflansch 4 und/oder dem Deckel des Innenrings 2 fest verbunden sein, wohingegen der andere Mastarm, der relativ zum ersten Mastarm mittels des Drehantriebs verschwenkbar sein soll, mit einem oder mehreren der Außenringe festgelegt sein. Durch entsprechende Drehung des Schwenkantriebs kann dann die Verschränkung bzw. die Verschwenkung der beiden Mastarme relativ zueinander bewerkstelligt werden, wobei der Drehantrieb absolut konstant ist und abhängig von der Konstruktion des Mastarmaufbaus eine beliebige Verschwenkung der Mastarme relativ zueinander in außerordentlich kompakter Bauweise des Aufbaus ermöglicht ist.

Je nach Auslegung der relativ zueinander verschwenkbaren Mastarme ist es hierbei möglich nur einen hydraulischen Drehantrieb zu verwenden, es können aber auch zwei oder mehrere insbesondere axial ausgerichtete hydraulische Drehantriebe je Gelenkachse verwendet werden. Zweckmäßigerweise können auch mehr als zwei Ringkolben im Drehantrieb verwendet sein, so dass der Drehantrieb etwa als 3-Kolbensystem ausgebildet sein kann. Dies ist letztendlich von der Auslegung der hydraulischen Drehantriebe und auch von der Auslegung der Mastarme abhängig und deren Größe sowie geplante Lastaufnahme.

Bei dem Eingriff der miteinander zusammenwirkenden Stirnverzahnungen zwischen den Ringkolben und den jeweiligen Außenringen erfolgt hierbei die Steuerung derart, dass beim Einfahren der Stirnverzahnung eines Ringkolbens in die Stirnverzahnung eines entsprechenden Außenringes definiert ein Einfahren der Zähne in jeweils eine entsprechende Zahnlücke erfolgt, also nicht Zahnspitze auf Zahnspitze fährt, so dass beim Einfahren der Stirnverzahnung der Ringkolben jeweils die treibenden Flanken der Zähne der Stirnverzahnung die Drehung des entsprechenden Außenringes bewerkstelligen, einschließlich der damit drehfest verbundenen weiteren Außenringe.

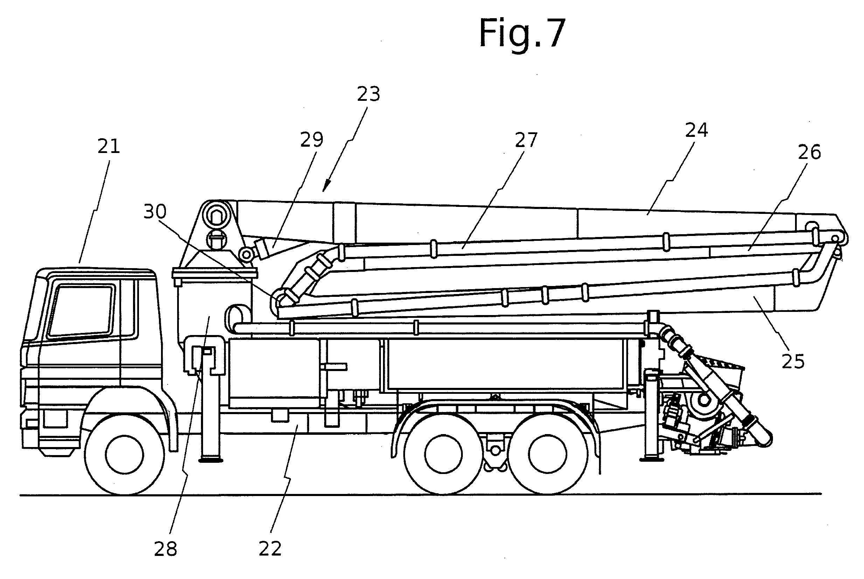

Nur beispielhaft wird anhand der Fig. 7 ein bevorzugter Anwendungsfall der Erfindung illustriert. Fig. 7 zeigt hierbei eine verfahrbare Autobetonpumpe mit einem Führerhaus 21 an einem Fahrzeugrahmen 22, auf dem eine Betonpumpe montiert ist. Ferner zeigt Fig. 7 einen Mastaufbau 23 aus insgesamt drei Mastarmen 24, 25 und 26, die an ihren Enden gelenkig miteinander verbunden und ausschwenkbar sind und überdies Rohrförderleitungen 27 tragen. Der Mastaufbau 23 ist hierbei auf einem Drehkranz 28 angeordnet und damit insgesamt auch um eine vertikale Achse verschwenkbar. Fig.7 zeigt hierbei ein konventionelles Fahrzeug, bei dem zum Verschwenken der Mastarme Hydraulikkolben in Art von Schubkolbengetrieben (29) verwendet werden, die durch den erfindungsgemäßen Drehantrieb ersetzt werden. Beispielsweise werden erfindungsgemäß die Mastarme 25 und 26 durch einen hydraulischen Drehantrieb verschwenkt, wobei hier zwecksmäßigerweise der Innenring bzw. Deckel 80 und/oder Ringflansch 4 fest mit dem Mastarm 26 verbunden sein kann und der Mastarm 25 fest mit den Außenringen 5 bis 7. Durch entsprechende Taktung der Ringkolben kann dann die Verschwenkung der beiden Mastarme 25 und 26 relativ zueinander erfolgen. Dadurch ergibt sich eine präzise, winkelgenaue Ausfahrbewegung, die im Rahmen der Gesamtsteuerung auch präzise wiederholt angefahren werden kann. Der aus Figur 4 ersichtliche Hohlraum 15 durch den Drehantrieb ermöglicht infolge der ringförmigen Ausbildung der Bauelemente zudem, dass die Förderleitung 27 den Mittelpunkt des Gelenkes 30 durchdringen kann, wie es aus Figur 7 hervorgeht.

## Patentansprüche

1. Mastaufbau insbesondere für Autobetonpumpen, mit mindestens einem ersten und einem zweiten Mastarm, die über eine Achse gelenkig miteinander verbunden sind und die durch mindestens einen hydraulischen Drehantrieb relativ zueinander um diese Achse zum Zwecke der Mastarmverschwenkung drehbar sind,
**gekennzeichnet durch** mindestens eine Kolben-Zylinder-Anordnung mit Getriebe zur Umwandlung der translatorischen Kolben Hin- und Herbewegung in eine Drehbewegung für die Mastarmverschwenkung, welche mindestens zwei hydraulisch angetriebene Ringkolben (8, 9) umfasst, die zudem einen Teil des Getriebes bilden und mit Außenringen (5, 6, 7) des Getriebes zusammenwirken, welche ebenfalls Teil der Kolben-Zylinder-Anordnung sind.

2. Mastaufbau nach Anspruch 1 , **gekennzeichnet durch** einen zentralen, vorzugsweise **durch** eine Keilwelle gebildeten Innenring (2), auf den die, vorzugsweise mit einer komplementären Keil Verzahnung ausgebildeten Ringkolben (8, 9) drehfest, aber axial verschieblich in Reihe hintereinander angeordnet und die mit den Ringkolben (8, 9) zusammenwirkenden Außenringe (5-7) drehbar, aber axial festgelegt angeordnet sind.

3. Mastaufbau nach Anspruch 1 oder 2, **dadurch gekennzeichnet, dass** jeder Ringkolben (8, 9) zwei ringförmige Stirnverzahnungen (8e, 9e) aufweist, die in jedem Ringkolben voneinander weggerichtet sind und mit komplementären ringförmigen Stirnverzahnungen (5e, 6e, 7e) jeweils eines Teils der Außenringe (5, 6, 7) zusammenwirken.

4. Mastaufbau nach Ansprüche 2 und 3, **dadurch gekennzeichnet, dass** der Innenring (2) auf einer Seite mit einem Ringflansch (4) ausgebildet und auf seiner anderen Seite mit einem flanschartigen Deckel (80) versehen ist, der vorzugsweise stirnseitig am Innenring (2) befestigbar ist, dass die Ringkolben (8, 9) und die Außenringe (5-7) zwischen Deckel (80) und Ringflansch (4) angeordnet sind, dass der Innenring (2) mit dem Ringflansch (4), dem Deckel (80) und den Außenringen (5-7) den Zylinder für die Ringkolben bildet und die axiale Hin- und Herbewegung der Ringkolben auf dem Innenring begrenzt, wobei die Stirnverzahnungen (5e-9e) der Ringkolben und Außenringe das Getriebe des Drehantriebs darstellen.

5. Mastaufbau nach einem der Ansprüche 2 bis 4, **dadurch gekennzeichnet, dass** auf dem Innenring (2) zwei Ringkolben (8, 9) und drei Außenringe (5, 6, 7) angeordnet sind, welche die Ringkolben (8, 9) übergreifen.

6. Mastaufbau nach Anspruch 5, **dadurch gekennzeichnet, dass** der am Ringflansch (4) anliegende (rechte) Außenring (5) an seinem Innenumfang eine vom Ringflansch (4) weggerichtete Stirnverzahnung (5e) aufweist, die vorzugsweise an einer umlaufenden Innenschulter (5d) des Außenringes (5) ausgebildet ist, dass der dem Ringflansch (4) benachbarte (rechte) Ringkolben (8) eine zum Ringflansch (4) gerichtete Stirnverzahnung (8e) für den Eingriff mit der Stirnverzahnung (5e) des dem Ringflansch (8) benachbarten (rechten) Außenrings (5) aufweist, dass der am Deckel (80) anliegende (linke) Außenring (7) an seinem Innenumfang eine zum Ringflansch (4) gerichtete Stirnverzahnung (7e) vorzugsweise an einer Innenschulter (7d) aufweist, die mit einer vom Ringflansch (4) weggerichtete Stirnverzahnung (9e) des im Deckel (80) benachbarten (linken) Ringkolbens (9) zusammen wirkt, und dass zwischen dem rechten und linken Außenring (5, 7) ein mittlerer Außenring (6) angeordnet ist, der zwei Stirnverzahnungen (6e) aufweist, von denen die dem Ringflansch (4) benachbarte Stirnverzahnung auf den Ringflansch (4) und die dem Deckel (80) benachbarte Stirnverzahnung vom Ringflansch (4) weggerichtet ist, beide Stirnverzahnungen (6e) vorzugsweise jeweils an einer Innenschulter (6d) des mittleren Außenrings (6) angeordnet sind, und die beiden Stirnverzahnungen (6e) jeweils mit einer weiteren (zweiten) Stirnverzahnung (8e, 9e) der Ringkolben (8, 9) zusammen wirken.

7. Mastaufbau nach Anspruch 6, **dadurch gekennzeichnet, dass** die Stirnverzahnungen (5e bis 9e) zueinander komplementär ausgebildet sind, und vorzugsweise ein stetiger flächiger Zahnflankenkontakt zwischen mindestens einem Teil der Verzahnungen gewährleistet ist.

8. Mastaufbau nach Anspruch 6 oder 7, **dadurch gekennzeichnet, dass** die beiden Stirnverzahnungen eines jeden Ringkolbens (8, 9) mittig auf dem Außenumfang des Ringkolbens angeordnet und vorzugsweise beidseitig einer mittigen Außenschulter (8b, 9b) vorgesehen sind.

9. Mastaufbau nach einem der Ansprüche 4 bis 8, **dadurch gekennzeichnet, dass** der Deckel (80) durch über den Umfang angeordnete Schraubverbindungen mit der dem Ring- flansch gegenüberliegenden Stirnseite des Innenrings (2) verbunden ist, und dass die Außenringe (5, 6, 7) durch jeweils über den Umfang angeordnete Schraubverbindungen miteinander verbindbar sind, und dass vorzugsweise die Bauelemente des Drehantriebs, insbesondere Deckel, Ringkolben, Außenringe und Innenringe mit Flansch, hohl, insbesondere ringförmig ausgebildet sind und einen zentralen Hohlraum durch den Drehantrieb für die Durchführung von Rohrleitungen, Kabeln und dergleichen bildet.

10. Mastaufbau nach einem der Ansprüche 3 bis 9, **dadurch gekennzeichnet, dass** die Stirnverzahnungen (5e bis 9e), insbesondere deren Zähne mit ihren Zahnflanken derart konsturiert sind, dass die translatorische Hin- und Herbewegung der Ringkolben (8, 9) infolge Eingriffs der Stirnverzahnungen in eine Drehbewegung der Außenringe (5, 6, 7) umgesetzt wird.

11. Mastaufbau nach einem der Ansprüche 3 bis 10, **dadurch gekennzeichnet, dass** die Ringkolben (8, 9) auf dem Innenring (2) in der Begrenzung der Stirnverzahnungen (5e bis 7e) der Außenringe (5, 6, 7) bewegbar sind.

12. Mastaufbau nach einem der Ansprüche 1 bis 11, **dadurch gekennzeichnet, dass** die Ringkolben (8, 9) hubmäßig versetzt, insbesondere um einen halben Hub versetzt alternierend zueinander hydraulisch angetrieben sind, und dass vorzugsweise jedem Ringkolben zwei Hydraulikanschlüsse für die beidseitige Beaufschlagung des Kolbens mit Hydraulikflüssigkeit zugeordnet sind.

13. Mastaufbau nach Anspruch 12, **dadurch gekennzeichnet, dass** die Steuerung der Ringkolben (8, 9) mechanisch mittels einer Steuerscheibe erfolgt, welche die Schaltimpulse für entsprechende Hydraulikventile für die Hydraulikzufuhr zu den Ringkolben (8, 9) bestimmt.

14. Mastaufbau nach einem der Ansprüche 2 bis 13, **dadurch gekennzeichnet, dass** der erste Mastarm mit dem Innenring (2), insbesondere dem Ringflansch (4), und/oder dem Deckel (80) fest verbunden und der zweite Mastarm mit mindestens einem der Außenringe (5, 6, 7) fest verbunden ist oder umgekehrt.

15. Autobetonpumpe mit einem Fahrzeug, einer Betonpumpe mit einer daran angeschlossenen Rohrförderleitung und mit einem Mastaufbau mit mindestens zwei zueinander verschwenkbaren Mastarmen, wobei die Betonpumpe und der Mastaufbau auf dem Fahrzeug angeordnet sind, **gekennzeichnet durch** einen Mastaufbau nach mindestens einem der Ansprüche 1 bis 14.

## Claims

1. Boom construction particularly for truck-mounted concrete pumps, comprised of at least a first and a second boom arm which are pin- jointed to each other and which are rotatable relatively to each other about this axis by at least of one hydraulic rotary drive for the purpose of boom arm pivoting,
**characterized by** at least one piston-cylinder arrangement including a gear for transforming the translational piston reciprocating movement into a rotary movement for boom arm pivoting, said arrangement comprising at least two hydraulically driven annular pistons (8,9) which additionally form one part of the gear and which interact with outer rings (5,6,7) of the gear which are also part of the piston-cylinder arrangement.

2. Boom construction according to claim 1, **characterized by** a central inner ring (2) preferably formed by a spline shaft, on which the annular pistons (8, 9), preferably configured with a complementary spline, being arranged in rotatably secured arrangement, though axially slidable in a row one behind the other and on which the outer rings (5-7) interacting with the annular pistons (8, 9) are arranged rotatably, but axially secured.

3. Boom construction according to claim 1 or 2, **characterized in that** each annular piston (8, 9) is comprised of two ring-shaped spur gearing (8e, 9e) which are pointing away from each other in each annular piston and which interact in each case with complementary ring-shaped spur gearings (5e, 6e, 7e) of one part of the outer rings (5, 6, 7).

4. Boom construction according to claims 2 and 3, **characterized in that** the inner ring (2) on one side is configured with an annular flange (4) and on its other side is provided with a flange-type cover (80) which can preferably be fastened at the front to the inner ring (2), **characterized in that** the annular pistons (8, 9) and the outer rings (5-7) are arranged between the cover (80) and the ring-type flange (4), **characterized in that** the inner ring (2) together with the ring-type flange (4), the cover (80) and the outer rings (5-7) form the cylinder for the annular pistons and limit the axial reciprocating movement of the annular pistons on the inner ring, wherein the spur gearings (5e-9e) of the annular pistons and outer rings representing the gear of the rotary drive.

5. Boom construction according to any of claims 2 to 4, **characterized in that** on the inner ring (2) two annular pistons (8, 9) and three outer rings (5, 6, 7) which overlap the annular pistons (8, 9) are arranged.

6. Boom construction according to claim 5, **characterized in that** the (right) outer ring (5) leaning against the ring-type flange (4) at its inner circumference comprises a spur gearing (5e) pointing away from the ring-type flange (4), said spur gearing being preferably configured at a circumferential inner shoulder (5d) of the outer ring (5), **characterized in that** the (right) annular piston (8) adjacent to the ring-type flange (4) comprises a spur gearing (8e) pointing towards the ring-type flange (4) for indentation with the spur gearing (5e) of the (right) outer ring (5) located adjacent to the ring-type flange (8), **characterized in that** the (left) outer ring (7) leaning to the cover (80) on its inner circumference comprises a spur gearing (7e) pointing towards the ring-type flange (4), preferably at one inner shoulder (7d), said spur gearing interacting with a spur gearing (9e) pointing away from the ring-type flange (4) of the adjacent (left) annular piston (9) in the cover (80), and **characterized in that** a central outer ring (6) is arranged between the right and the left outer ring (5, 7), said central outer ring (6) comprising two spur gearings (6e), thereof one spur gearing adjacent to the ring-type flange (4) pointing to the ring-type flange (4) and the spur gearing adjacent to the cover (80) pointing away from the ring-type flange (4), both spur gearings (6e) being preferably arranged each at one inner shoulder (6d) of the central outer ring (6), and the two spur gearings (6e) each interact with another (second) spur gearing (8e, 9e) of the annular pistons (8, 9).

7. Boom construction according to claim 6, **characterized in that** the spur gearings (5e-9e) are configured complementary to each other, and preferably a steady full-area contact between at least part of the gearings is ensured.

8. Boom construction according to claim 6 or 7, **characterized in that** the two spur gearings of each annular piston (8, 9) are centrally arranged on the outer circumference of the annular piston and are preferably arranged on either side of a central outer shoulder (8b, 9b).

9. Boom construction according to any of the claims 4 to 8, **characterized in that** the cover (80) is connected via screw connections spread around the circumference to the inner ring (2) front side opposing the ring-type flange, and **characterized in that** the outer rings (5, 6, 7) are connectible to each other via screw connections arranged around the circumference, and **characterized in that** preferably the structural elements of the rotary drive, in particular the cover, annular piston, outer rings, and inner rings with a flange are configured hollow, in particular ring-shaped, and form a central hollow space through the rotary drive for lead-through of pipelines, cables, and the like.

10. Boom construction according to any of claims 3 to 9, **characterized in that** the spur gearings (5e-9e), in particular their teeth with their tooth flanks are so designed that the translational reciprocating movement of the annular pistons (8, 9) is transformed due to the indentation of the spur gearings into a rotary movement of the outer rings (5, 6, 7).

11. Boom construction according to any of claims 3 to 10, **characterized in that** the annular pistons (8, 9) on the inner ring (2) are movable within the limitation of the spur gearings (5e-7e) of the outer rings (5, 6, 7).

12. Boom construction according to any of claims 1 to 11, **characterized in that** the annular pistons (8, 9) are stroke-wise offset, in particular hydraulically driven alternating to each other offset by half a stroke, and **characterized in that** preferably two hydraulic connections for bilateral charging of the piston with hydraulic fluid are allocated to each annular piston.

13. Boom construction according to claim 12, **characterized in that** the control of the annular pistons (8, 9) is performed mechanically by means of a control disk which determines the switching pulses for the relevant hydraulic valves for the hydraulic fluid supply to the annular pistons (8. 9).

14. Boom construction according to any of claims 2 to 13, **characterized in that** the first boom arm is solidly linked to the inner ring (2), in particular to the ring-type flange (4), and/or to the cover (80) and that the second boom arm is at least solidly linked to one of the outer rings (5, 6, 7) or vice versa.

15. Truck-mounted concrete pump comprised of a vehicle, a concrete pump with a tubular delivery line connected to it and with a boom construction comprising at least two boom arms pivotable towards each other, wherein the concrete pump and boom construction being arranged on the vehicle,
**characterized by** a boom construction according to at least one of claims 1 to 14.

## Revendications

1. Structure de flèche, en particulier pour une pompe à béton automotrice, ayant au moins un premier et un deuxième bras de flèche qui sont reliés l'un avec l'autre de façon articulée au moyen d'un axe et qui peuvent être entraînés en rotation l'un par rapport à l'autre autour de cet axe au moyen d'un entraînement rotatif aux fins du pivotement des bras de flèche,
**caractérisée**
**par** au moins un agencement de piston et de cylindre ayant une transmission destinée à transformer le mouvement translatoire d'aller et retour du piston dans un mouvement rotatif pour le pivotement des bras de flèche, qui comprend au moins deux pistons annulaires à entraînement hydraulique (8, 9), qui en même temps, forment une partie de la transmission et coopèrent avec des bagues extérieures (5, 6, 7) de la transmission, qui font également partie de l'agencement de piston et de cylindre.

2. Structure de flèche selon la revendication 1, **caractérisée par** une bague intérieure centrale (2), de préférence formée par un arbre cannelé, sur laquelle les pistons annulaires (8, 9), de préférence réalisés avec une cannelure complémentaire, sont agencés en série l'un après l'autre de façon fixe en rotation, mais mobile dans le sens axial et les bagues extérieures (5-7) coopérant avec les pistons annulaires (8, 9) sont agencées de façon rotative, mais fixe dans le sens axial.

3. Structure de flèche selon la revendication 1 ou 2, **caractérisée en ce que** chaque piston annulaire (8, 9) présente deux dentures frontales de forme annulaire (8e, 9e), qui sont orientées à l'opposé l'une de l'autre dans chaque piston annulaire et coopèrent avec des dentures frontales de forme annulaire complémentaires (5e, 6e, 7e) respectives d'une partie des bagues extérieures (5, 6, 7).

4. Structure de flèche selon les revendications 2 et 3, **caractérisée en ce que** la bague intérieure (2) est réalisée sur un côté avec une bride annulaire (4) et munie sur son autre côté d'un couvercle similaire à une bride (80), qui peut de préférence être fixé sur la bague intérieure (2) du côté frontal, **en ce que** les pistons annulaires (8, 9) et les bagues extérieures (5-7) sont agencés entre le couvercle (80) et la bride annulaire (4) et **en ce que** la bague intérieure (2), avec la bride annulaire (4), le couvercle (80) et les bagues extérieures (5-7), forme le cylindre pour les pistons annulaires et délimite le mouvement axial d'aller et retour des pistons annulaires sur la bague intérieure, les dentures frontales (5e-9e) des pistons annulaires et des bagues extérieures constituant la transmission de l'entraînement rotatif.

5. Structure de flèche selon l'une des revendications 2 à 4, **caractérisée en ce que** deux pistons annulaires (8, 9) et trois bagues extérieures (5, 6, 7) qui viennent en prise sur les pistons annulaires (8, 9) sont agencés sur la bague intérieure (2).

6. Structure de flèche selon la revendication 5, **caractérisée en ce que** la bague extérieure (droite) (5) reposant sur la bride annulaire (4) présente sur son pourtour intérieur une denture frontale (5e) orientée à l'opposé de la bride annulaire (4), qui est de préférence réalisée sur un épaulement intérieur périphérique (5d) de la bague extérieure (5), **en ce que** le piston annulaire (droit) (8) adjacent à la bride annulaire (4) présente une denture frontale (8e) orientée vers la bride annulaire (4) pour venir en prise avec la denture frontale (5e) de la bague extérieure (droite) (5) adjacente à la bride annulaire (8), **en ce que** la bague extérieure (gauche) (7) reposant sur le couvercle (80) présente sur son pourtour intérieur une denture frontale (7e) orientée vers la bride annulaire (4), de préférence sur un épaulement intérieur (7d), qui coopère avec une denture frontale (9e) orientée à l'opposé de la bride annulaire (4) du piston annulaire (gauche) (9) adjacent dans le couvercle (80) et **en ce qu'**entre la bague extérieure droite et gauche (5, 7) est agencée une bague extérieure médiane (6), qui présente deux dentures frontales (6e), dont la denture frontale adjacente à la bride annulaire (4) est orientée vers la bride annulaire (4) et la denture frontale adjacente au couvercle (80) est orientée à l'opposé de la bride annulaire (4), les deux dentures frontales (6e) étant de préférence chacune agencées sur un épaulement intérieur (6d) de la bague extérieure médiane (6) et les deux dentures frontales (6e) coopérant chacune avec une (deuxième) denture frontale complémentaire (8e, 9e) des pistons annulaires (8, 9).

7. Structure de flèche selon la revendication 6, **caractérisée en ce que** les dentures frontales (5e à 9e) sont réalisées de façon complémentaire l'une par rapport à l'autre, et de préférence, un contact à plat permanent des flancs de dent entre au moins une partie des dentures est assuré.

8. Structure de flèche selon la revendication 6 ou 7, **caractérisée en ce que** les deux dentures frontales de chaque piston annulaire (8, 9) sont agencées au centre sur le pourtour extérieur du piston annulaire et sont de préférence prévues des deux côtés d'un épaulement extérieur médian (8b, 9b).

9. Structure de flèche selon l'une des revendications 4 à 8, **caractérisée en ce que** le couvercle (80) est assemblé avec le côté frontal de la bague intérieure (2) en opposition à la bague annulaire au moyen de vissages agencés sur le pourtour, **en ce que** les bagues extérieures (5, 6, 7) peuvent être assemblées l'une avec l'autre au moyen de vissages respectifs agencés sur le pourtour et **en ce que** de préférence, les composants de l'entraînement rotatif, en particulier le couvercle, les pistons annulaires, les bagues extérieures et les bagues intérieures avec leur bride, sont réalisés de façon creuse, en particulier dans une forme annulaire, en formant un espace creux central à travers l'entraînement rotatif pour le passage de conduites, de câbles et similaire.

10. Structure de flèche selon l'une des revendications 3 à 9, **caractérisée en ce que** les dentures frontales (5e à 9e), en particulier leurs dents avec leurs flancs de dent, sont conçues de telle sorte que le mouvement translatoire d'aller et retour des pistons annulaires (8, 9) est converti dans un mouvement rotatif des bagues extérieures (5, 6, 7) à la suite de l'engagement en prise des dentures frontales.

11. Structure de flèche selon l'une des revendications 3 à 10, **caractérisée en ce que** les pistons annulaires (8, 9) peuvent être déplacés sur la bague intérieure (2) dans la limite des dentures frontales (5e à 7e) des bagues extérieures (5, 6, 7).

12. Structure de flèche selon l'une des revendications 1 à 11, **caractérisée en ce que** les pistons annulaires (8, 9) sont entraînés hydrauliquement de façon décalée dans leur course, en particulier de façon décalée d'une demi-course en alternance, et **en ce que** de préférence, deux raccords hydrauliques sont adjoints à chaque piston annulaire pour alimenter le piston en fluide hydraulique des deux côtés.

13. Structure de flèche selon la revendication 12, **caractérisée en ce que** la commande des pistons annulaires (8, 9) est réalisée mécaniquement au moyen d'un disque de réglage, qui détermine les impulsions de commutation pour des soupapes hydrauliques correspondantes pour l'amenée de fluide hydraulique aux pistons annulaires (8, 9).

14. Structure de flèche selon l'une des revendications 2 à 13, **caractérisée en ce que** le premier bras de flèche est assemblé de façon fixe avec la bague intérieure (2), en particulier avec la bride annulaire (4), et/ou avec le couvercle (80) et le deuxième bras de flèche est assemblé de façon fixe avec au moins une des bagues extérieures (5, 6, 7) ou inversement.

15. Pompe à béton automotrice ayant un véhicule, une pompe à béton avec une conduite de transport tubulaire qui y est raccordée et avec une structure de flèche ayant au moins deux bras de flèche pouvant pivoter l'un par rapport à l'autre, la pompe à béton et la structure de flèche étant agencées sur le véhicule,
**caractérisée**
**par** une structure de flèche selon au moins l'une des revendications 1 à 14.
